# EUROPEAN PATENT SPECIFICATION

(11) **EP 3 354 816 B1**
(45) Date of publication and mention of the grant of the patent: **24.06.2020**
(21) Application number: 18153592.3
(22) Date of filing: 26.01.2018
(51) Int. Cl.: E04D 5/10, B32B 25/10, C08L 23/22, E04D 13/14, E04D 13/147, B32B 25/18

(54) **MEMBRANE MATERIAL**
MEMBRANMATERIAL
MATÉRIAU DE MEMBRANE

(30) Priority: 26.01.2017 DK 201770051
(43) Date of publication of application: 01.08.2018
(73) Proprietor: Sabetoflex A/S, 7870 Roslev (DK)
(72) Inventor: Poulsen, Per, 7870 Roslev (DK)
(74) Representative: Tellefsen, Jens J.

(56) References cited:
- AU-B2- 744 066
- DE-A1-102004 035 201
- DE-U1- 20 015 297
- JP-A- 2001 239 616
- US-A1- 2006 127 627
- US-A1- 2009 291 249
- US-A1- 2010 285 259
- US-B1- 6 418 687

## Description

### Field of the Invention

The present invention relates to a membrane material as well as a method of using said membrane material.

### Background of the Invention

In the art there are many different building materials available when building various structures. Also a building includes various constructions which have to work together, and especially the outer surface of a building shall be able to remain watertight, expand/contract due to thermal variations etc. Typically various building components will be separated by a distance/gap (between window frames/walls, chimneys/roof cladding, ventilation pipes/roof cladding, various parts of roofs with different inclinations etc.). For these reasons a host of specific building materials are creat-ed/developed in order to be able to interface with the building materials on either side of the gap which is to be bridged and sealed.

For example between corrugated roof claddings and walls or chimneys being arranged at an oblique angle to the corrugated roof material it is necessary with the prior art to use a flashing material which conforms to the corrugated roof structure, but at the same time is able to be arranged substantially flush with the chimney or wall structure arranged at the oblique angle. As there are many variations within the corrugated roof material it will to a large degree be necessary to provide flashings which at least are able to interface with a relatively limited group of flashing materials in order to achieve the desired and necessary contact such that water intrusion and the like is avoided.

A further aspect is the fact that the membrane material shall also be able to stretch and contract as the adjacent building parts move relative to each other, for example due to thermal expansion or normal movements for example caused by heavy wind loads.

An example of such an adaptable flashing is disclosed in EP2626482.

A further example is a membrane material sold under the trade name Wakaflex®. Wakaflex® is a deformable, five-layered laminate having a high content of polyisobutylene (PIB) and an embedded core of an aluminium net.

In order to be able to adhere to surfaces one side of the Wakaflex® is provided with butylene strips embedded in the Wakaflex® membrane such that as the butylene is exposed, for example by removing a cover strip or paper it will be able to adhere the membrane to any desired surface. As the Wakaflex® is deformed in order to correspond to the shape around the gap which it is to cover, the PIB is stretched, and at the same time the embedded reinforcement layer in the shape of an aluminium net is deformed.

Examples of flashing materials including a polyisobutylene (PIB) membrane in which is embedded a deformable/stretchable metal mesh are found in GB 2184685 and DE 200 18657.

Typically, the aluminium net will be created by having a thin aluminium plate/sheet in which a number of long, parallel slits are provided such that by pulling in the aluminium plate/sheet, the slits will offer very little resistance and as such the aluminium plate will relatively easy deform by having a large number of the slits opening thereby creating a net structure.

Although the Wakaflex® has some very good and important characteristics it has at least two major drawbacks.

First of all the butyl-strips on the side which is to be adhered to the surface of the building structure are provided in strips therefore leaving unadhered areas of the materials between adjacent strips. In these areas moisture or water may accumulate such that as temperature changes, for example to freezing conditions, the water/moisture will expand thereby impacting the adhesion between the Wakaflex® material and the building construction.

This may at least over time lead to openings whereby the purpose of the Wakaflex® membrane material is more or less lost. The same is true if the temperature becomes very high whereby steam may be generated between the Wakaflex® membrane and the roof surface such that steam bubbles may deteriorate the connection between the Wakaflex® and the building part.

A second drawback is the fact that the aluminium netting has a limited expansion capability such that if the Wakaflex® material is expanded more than for example 20% in any direction, the aluminium netting will break thereby losing its reinforcing capabilities. As the netting is embedded in the material it is difficult to detect that a break has occurred. However, as the Wakaflex® in situ is exposed to movement etc., the weak spot where the breakage has occurred will quickly develop into a crack or hole, thereby rendering the membrane useless.

A further flexible flashing material is disclosed in DE 102004035201. This material also comprises a flexible polyisobutylene (PIB) material in which long independent and not connected glass fibers are embedded in a cross-wise pattern. In this manner the fibres help to reinforce the flashing material without hampering the deformability. The fibres simply slide in the embedded material.

### Object of the Invention

Consequently, it is an object of the present invention to provide a membrane material which at least addresses these drawbacks, but also provides other advantages.

### Description of the Invention

The invention addresses this by providing a membrane material according to claim 1, in particular comprising a front layer, an embedded knitted reinforcement layer and a back layer, wherein said front layer mainly consists of polyisobutylene, and said back layer mainly consists of butyl based rubber and a content of polyisobutylene.

A suitable material for the front layer is described in DE 10028531, wherein a roofing material made from a high molecular weight polyisobutylene and ethylene polymer including a filler and a polymer with aromatic substituents is described.

By having a back layer containing butyl in a mixture of polyisobutylene (PIB) the invention foresees that a substantially continuous adhesion is created between the membrane material according to the present invention and any surface on which the membrane material is to be brought into contact. Furthermore, if the back layer is brought into contact with the surface of the front layer - for example when overlapping the membrane material according to the present invention, the back layer will vulcanise to the front layer, thereby creating a strong, flexible watertight connection.

Also by providing the reinforcement in a knitted configuration it is possible to stretch the material much more than the prior art materials without disintegrating the reinforcement material.

Furthermore, the knitted structure also allows for deformations out of the plane of the membrane material and as such in a three-dimensional deformation structure.

At least within the present invention the term "knitted" shall be construed as any manner in which a mat or sheet is created by intertangling one or more threads. This definition also encompasses a structure where a plurality of loops are interconnected such that a loose, but connected mat is created.

In addition to the stretching capability by the knitted reinforcement it is possible to allow more or less stretching by knitting the reinforcement more or less tightly. The front and back layers will at room temperature be able to be stretched up to 400% and as such a very flexible membrane material is provided. Due to the knitting and the inherent continuity of the reinforcement layer when stretching the membrane material a substantially even stretching of the reinforcement layer will also be achieved thereby providing consistent characteristics of the membrane material substantially over the entire surface of the membrane material.

In the invention the embedded reinforcement layer is knitted from a thread, the material of the thread selected among stainless steel, aluminium.

In a further advantageous embodiment of the invention the reinforcement layer allows for at least 100% stretch in a first direction, and at least 50% stretch in a second direction perpendicular to said first direction.

In a still further advantageous embodiment of the invention the knitted reinforcement layer allows for at least 100% stretch in both a first direction and a second direction where said second direction is at an oblique direction relative to said first direction. Due to the knitted reinforcement it is possible to knit the reinforcement in such manner that the stretch may be controlled.

In the embodiments above the stretching ability has been controlled either by 100% stretch in a first direction and at least 50% stretch in a second direction perpendicular to the first direction or as with the latter example more than 100% stretch in both directions. Naturally, the last embodiment requires a relatively loose knitting allowing the intertangled threads to be relatively displaced about the same amount (or ratio) in both directions, whereas with the former embodiment the knitting in the second direction will be a little tighter than the knitting in the first direction in order to distinguish the stretching abilities between the first direction and the second direction.

These stretching properties naturally have to comply with the stretching capabilities of the front and back layer. However, tests indicate that it is possible to make the different layers work together, at least for the stretching capabilities mentioned in this embodiment, but also for further stretching.

As the reinforcement layer made in a knitting process is not so directionally sensitive, it is possible to achieve substantial stretches in any direction whereby it is possible to deform the membrane material according to the present invention even to very complicated interfaces between construction parts thereby providing a very versatile and almost universally applicable material for closing gaps in buildings.

These gaps may arise for example between chimneys and roof surfaces, between skylights and roof surfaces between vertical walls, horizontal or oblique surfaces etc.

Furthermore, due to the three-dimensional properties of the materials, the membrane material according to the present invention is also especially suitable to use with corners or where round construction elements such as for example chimneys pass through substantially linear construction parts such as for example a roof surface or a wall.

In a further advantageous embodiment of the invention the front layer contains a fungicide, algaecide and/or a herbicide. By embedding chemicals in the PIB-material on the front layer it is foreseen that over time any algae, moss or the like will not be able to fasten and live on the membrane such that any detrimental effects this could have on the membrane material is avoided. Furthermore, due to the very low content of the fungicide, algaecide or herbicide, which is necessary in order to avoid the propagation of fungus or algae, the addition of these chemicals to the front layer has no influence on the physical or chemical capabilities of the front layer which will still be able to deform as described above and retain its membrane characteristics.

The invention is also directed at a method of using a membrane material as disclosed above. Naturally, the method enjoys the same advantages as the membrane material as described above.

The method specifically comprises using a membrane material according to claim 1, comprising a front layer, an embedded knitted reinforcement layer and a back layer, wherein said front layer mainly consists of polyisobutylene, and said back layer mainly consists of butyl based rubber and a content of polyisobutylene, said membrane material is used as a first covering material between two surfaces arranged adjacent to each other, but with a distance between the edges of the surfaces, where:
- at least a part of the surfaces in the vicinity of the edges is cleaned;
- the back layer of the membrane is brought into contact with at least the cleaned surfaces and urged against said surfaces, such that the membrane material spans the distance between the edges.

This method is foreseen as being useful for bridging gaps, for example in a roof construction between chimneys and the roof or attic windows and roof surfaces. The method may furthermore be used in order to renovate already existing flashings, for example flashings made by use of the Wakaflex membrane which membrane tends to quickly deteriorate over time due to the freezing cycles and sunlight and as such a very simple, reliable and high quality solution is to apply a membrane material according to the present invention as set out in the method described above.

Naturally, the method may also be used for completely new or complete renovations where older flashings are removed or where new openings in a roof structure arise. In such instances the first covering material will be arranged as described above directly onto the roof surface.

In a further advantageous embodiment of the method a second covering material in shape of a further membrane material layer is positioned on top of the first covering material, where before applying a further second covering material, the front layer is washed with a cleaning solvent activating the front layer material, such that the front layer of the first covering material will be able to be vulcanized to the back side of the second covering when bringing said second covering material into contact with the washed surface.

A requirement for achieving good adhesion and a tight connection is that the two surfaces are clean and compatible. The present membrane material according to the invention will be able to vulcanize its back side to its front side, but not immediately the front side to its front side. In order to be able to vulcanize the front side to the front side it is necessary to also activate the front side chemically.

In this context the activation of the membrane surface (front layer material) by washing with a suitable solvent (activating liquid), shall be understood such that the surface of the front layer material after washing is chemically ready to interact with the front layer of the second covering material. Preferably by a vulcanising process, but activation may also be in order to improve adhesive characteristics.

In some examples, particularly where a chimney or other pipe penetrates a roof surface it may be advantageous to create extra security against leakage, for example by providing a second covering material on top of the first covering material. The first covering material will ensure a tight and reliable contact to the surrounding surface, i.e. for example the roof surface, whereas the second covering material will be more focused on a water and leak tight connection around the projecting member be it a pipe or a chimney.

As the first and second covering materials are able to vulcanize together thereby making it almost indistinguishable where one material stops and the other material begins, a very reliable, tight and strong connection is created by the two materials, and at the same time by being able to focus one material on one surface and the other material on water proofing and creating leak tight connections around a second surface a very advantageous system is created.

The invention also provides a method for mounting a covering member manufactured from the membrane material of claim 1, adapted to cover a gap between two surfaces in a building, where a first surface is the circumference of an outer surface of a construction member arranged in close proximity to a second surface, wherein the covering member is provided with an aperture, said aperture with a shape smaller than the circumference of the first surface, and where said cover member has an upper surface and a lower surface, said lower surface including an adhesive, where a cover foil is applied to the lower surface, where the method comprises the following steps:
- A covering member having a suitable aperture corresponding to less than the circumference of the first surface is selected;
- The aperture is arranged around the circumference of the first surface, whereby the edge of the covering members' aperture is stretched, creating a tight fit with the first surface;
- Removing the covering foil from the lower side, thereby exposing the adhesive;
- Urging the cover member downwards such that the lower surface comes into adhesive contact with the second surface.

In this method which is different from the above-mentioned method by the fact that the covering member is provided with an aperture smaller than the circumference of the first surface the advantageous particular characteristics of the membrane material are used. For example, when it is desirable to create a watertight connection around a pipe penetrating a roof surface, the pipe will have a certain diameter. By selecting a covering member with an aperture where the aperture has a smaller diameter than the pipe projecting through the roof surface the perimeter of the aperture will need to be expanded in order to fit around the pipe.

Due to the superior material characteristics of the membrane material as discussed above a completely water tight connection may be created in this manner. Furthermore, as the membrane's back and/or upper surface is specifically designed to create a good adhesion to the roof surface a one-step watertight and leak-proof connection is created in this manner.

One of the properties of this material is the fact that the front layer may be activated such that it may vulcanize itself into the back layer. In this manner, for example when connecting two pieces of membrane or when the membrane material surrounds for example a chimney pass going through a roof surface by allowing the membrane material to overlap, a very tight reliable and strong connection is created.

The front surface of the membrane where it is desirable to overlap with the back layer in order to create a vulcanized connection has to be clean and thereafter activated by a cleaning solvent such as for example benzene or a benzene derivate.

In this manner the polymer structure of the front layer is opened (activated) making it possible to vulcanize with the front layer of the membrane. Thereby the membrane becomes very versatile in that by the simple treatment the membrane can both be connected at the treated front side but also vulcanize with the butyl and the PIB of the back layer.

An especially advantageous use of the membrane material according to the invention arises where one of the surfaces is a corrugated roof surface. The invention addresses this in a further method claim where the corrugated surface has an undulating surface alternating between tops and lows, and where the covering material is first arranged such that the covering material is in contact with a plurality of tops, whereafter the covering material between two tops is stretched by pulling upwards, where the stretching causes the covering material to elongate corresponding to 110% or more of the distance to be covered between two tops, thereafter urging the covering material downwards into contact with the surface between two tops.

With the invention the membrane material is stretched such that the front layer and back layer move independently of the knitted reinforcement layer. The thread of the knitted reinforcement layer more or less cuts through the material of the front layer and the back layer. Once the desired elongation has been provided to the membrane materials between adjacent tops the membrane material is urged downwards into contact with the surface between the two tops, and as the covering material is fastened to the roof surface, for example by a roller or the like, the front layer and back layer will again lock the knitted reinforcement layer in its position.

In this manner there is no tension created in the reinforcement layer and the covering material will not have a tendency to try to regain its original size or shape which could lead to detachment from the roofing surface. The adhesive contact between the cover material and the roof surface is tensionless. Adhesive connections are not suitable for long exposure to tension. Therefore, a much better and longer lasting connection is created by the membrane material according to the present invention used in the method as described above.

In other circumstances the surfaces on which it is desirable to attach the covering material's back layer are either so porous or wet that even though the surface is clean it is very difficult to make the back layer adhere or connect to the surface on which it is desirable to attach the covering material. In these instances the invention in a further method embodiment provides a solution whereby before urging the back layer into contact with the surface an intermediate layer is adhered to the surface, where said intermediate layer's underside is fastened to the surface by a suitable adhesive, and where said intermediate layer's top side is suitable to be adhesively fastened or vulcanized to the back layer of the membrane material.

The suitable adhesive may for example be modified a silan polymer, for example SabetoFIX® obtainable from Sabetoflex in Denmark. This adhesive is a one-component adhesive which is particular in that it hardens under the influence of moisture. Therefore, when being used on wet or porous surfaces it will adhere to the surface even though there is an amount of moisture, either hidden in the porous surface of the surface or on very wet surfaces.

### Description of the Drawing

The invention will now be described with reference to the accompanying drawings wherein
- Figure 1: illustrates all the different layers of the membrane material;
- Figure 2: illustrates one application of the membrane material;
- Figure 3: illustrates a cross-section through the membrane material;
- Figure 4: illustrates an embodiment where the inventive membrane according to the present invention has been used in a flashing in order to create a water tight connection between two surfaces
- Figure 5: illustrates a cross-section through a typical flashing construction according to the present invention
- Figure 6: illustrates a cross-section through a typical flashing construction according to the present invention
- Figures 7a-7d: illustrate the process of positioning a cover material on a corrugated roof.

### Detailed Description of the Invention

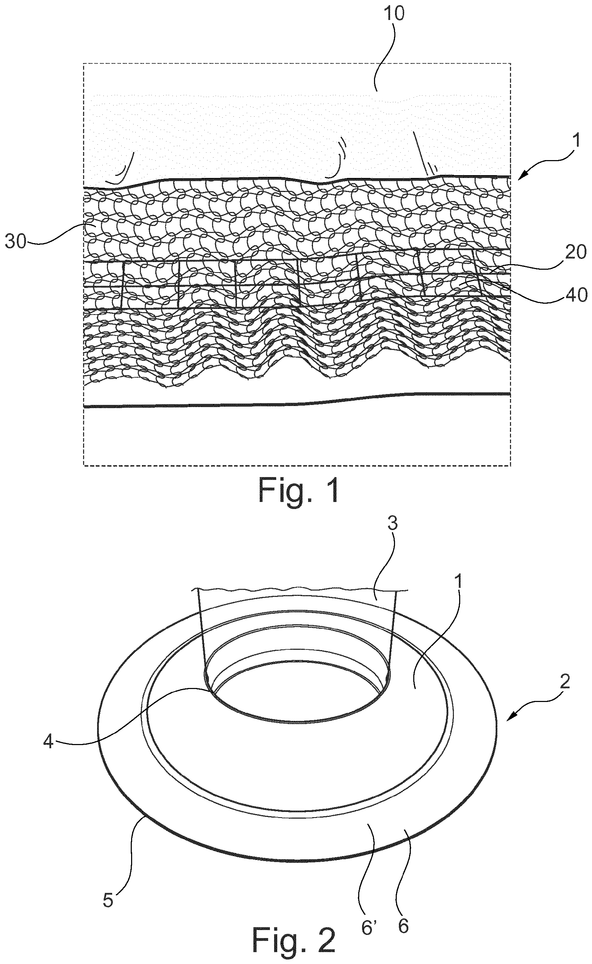

In figure 1 all the different layers of the membrane material are illustrated. The membrane 1 in this embodiment comprises three distinct layers 10, 20, 30 as well as a paper or foil cover layer 40. The top layer 10 mainly consisting of polyisobutylene is here indicated with a grey colour. The back layer 30 also comprises polyisobutylene, bur furthermore is provided with a butyl content such that the back layer will be able to adhere to various surfaces and/or vulcanize to the front layer 10.

Embedded between the front layer 10 and the back layer 30 is a reinforcement layer 20 embedded. In this connection the reinforcement layer 20 is connected to the front and back layer in such a manner that when the front and back layers are deformed the reinforcement layer will to the extent possible follow the deformation such that in practice the net structure of the reinforcement layer will be expanded creating larger distances between adjacent reinforcement threads. The actual reinforcement illustrated in figure 1 is knitted from a thin stainless steel wire. Due to the very loose netting of the reinforcement layer as it is embedded in the front and back layers 10, 20 the knitting and thereby the reinforcement layer may be expanded in any direction without risking a breakage.

In figure 2 is illustrated one application of the membrane material. In this application a membrane material 1 according to the invention is used to bridge the gap between a roof surface 2 and a cylindrical member 3. The cylindrical member 3 is arranged at an oblique angle with respect to the roof surface. This requires the membrane material to be able to be distorted in all directions. It is clear that the circumference 4 of the membrane material in contact with the circular member 3 is shorter than the circumference 5 at the edge of the membrane material 1 furthest away from the cylindrical member 3.

This variation and at the same time the three-dimensional shaping of the membrane material 1 requires that the membrane material adjacent the outer periphery 5 is stretched a lot more than the membrane material adjacent the inner periphery 4. As is clear from the illustration the integrity of the membrane material is maintained.

The membrane material 1 may advantageously be stretched also where it has its smallest dimensions, i.e. along the inner periphery 4 such that a good, tight connection will be established between the circular member 3 and the inner periphery 4.

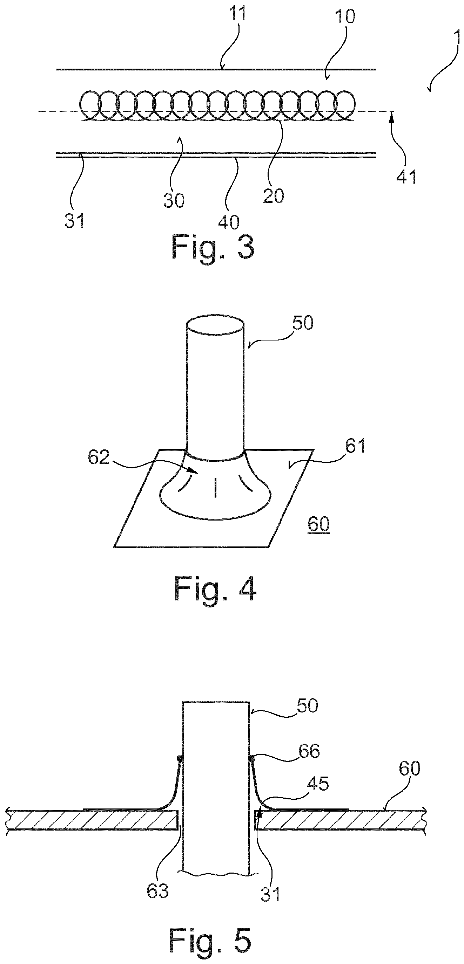

In figure 1 the different layers of the membrane material are illustrated, see above. In figure 3 is illustrated a cross-section through the membrane material 1. As is evident from figure 3 the embedded knitted reinforcement 20 is positioned between the top layer 10 and the back layer 30. In this manner the knitted reinforcement 20 is completely covered by membrane material. For illustrative purposes the centreline 41 is illustrated in dashed lines. In reality the top layer and or the back layer may have different thicknesses and different thickness relationships such that the median line 41 may be moved closer to the surface 11 of the top layer or closer to the surface 31 of the back layer. Also, a foil cover layer 40 is illustrated as covering the back layer as already described above.

In figure 4 is illustrated an embodiment where the inventive membrane material according to the present invention has been used in a flashing in order to create a water tight connection between two surfaces 50, 60. In this embodiment a first surface is symbolized by a substantially circular chimney 50 and the second surface is in the shape of a flat roof 60. On the flat roof is first arranged a membrane substantially covering the distance between the two building elements 50, 60. The membrane 61 may for example be a Wakaflex® or similar membrane or an older flashing which needs to be renovated or replaced. By cleaning the top surface of the flashing 61 and arranging a membrane flashing 62 according to the present invention an effective renovation of the flashing is created.

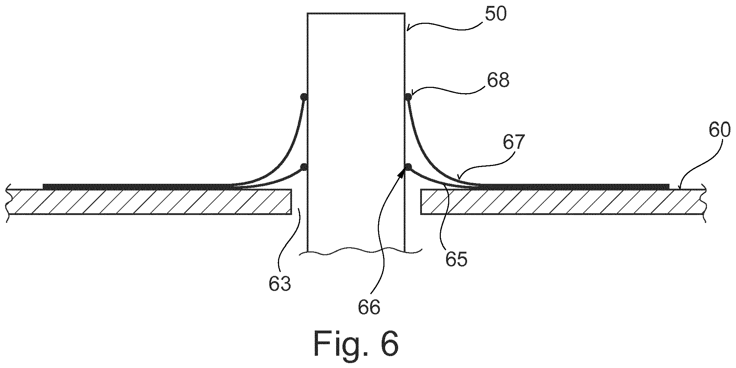

Turning to figures 5 and 6 cross-sections through two typical flashing constructions according to the present invention are illustrated. In figure 5 the two building surfaces 50, 60 are again illustrated as being a substantially circular chimney 50 and a flat roof 60. In the flat roof 60 is provided an aperture 63 through which the chimney 50 extends. A cover material 65 has been selected where the cover material has an aperture with a diameter less than the diameter of the chimney pipe 50.

In this manner, as the cover material 65 is positioned over the chimney pipe 50 the chimney pipe's larger diameter will cause the aperture in the cover material 65 to expand and deform thereby creating a close watertight connection 66 between the outer surface of the chimney pipe 50 and the cover material 65. Once the cover material 65 is positioned over the chimney pipe 50 the cover material 65 is folded upwards such that the cover foil 40 may be removed from the backside 31 of the membrane material (see figures 1 and 3). The surface of the roof 60 is thoroughly cleaned such that as the cover material 65 is flipped downwards after having removed the cover foil the exposed back surface 31 of the cover material 65 will be able to adhere directly onto the surface of the roof 60.

During this process the embedded knitted reinforcement is also expanded and when the membrane material is positioned and urged into position, the reinforcement is again fixed/locked relative to the front and back material layers.

In this manner is also created a reliable connection being both watertight and having a long life expectancy between the cover material 65 and the roof 60.

As is evident from figure 5 the cover material will attain a certain curve between the vertical position and the horizontal position. This is in order for water not to be caught between the two building components 50, 60. As the membrane material due to the knitted reinforcement 20, see figure 3, has a very good integrity and a relatively high strength at least with respect to the forces to which the cover material 65 is exposed, the membrane material is able to provide long life expectancy for this type of flashings even for the not supported parts of the membrane material.

Turning briefly to figure 6 another embodiment of a flashing is illustrated, in this embodiment also illustrated with reference to a substantially circular chimney element 50 passing through a roof surface 60. As was the case with the embodiment referred to above with reference to figure 5 a first membrane/cover material 65 is placed and positioned such that it covers the aperture 63 and distance between the two building elements 50, 60. This first cover material 65 may be an existing flashing which needs to be renovated or may be part of a new flashing to be installed.

The connection 66 between the first cover material 65 and the outer surface of the chimney element 50 may if it is a new membrane covering material 65 being installed provide a very tight and waterproof connection 66. On the other hand, if it is an already existing flashing, it may deteriorated due to frost and thaw, UV rays, movements caused by thermal differences between the two building components 50, 60 and other factors such that a not completely watertight connection 66 is provided between the two building elements 50, 60.

Consequently, a second covering material 67 is positioned on top of the first covering material 65 such that a new and improved waterproof connection 68 is created between the outer surface of the chimney element 50 and the covering element 67.

The covering element 67 may be installed in the same manner as described above with reference to figure 5 where the covering element had an aperture smaller than the diameter of the chimney pipe 50 such that a tensioned fit between the chimney element 50 and the covering element 67 is achieved.

As the membrane material deforms, it will to a certain degree also deform the knitted reinforcement. However, when being stretched, the reinforcement due to the fact that it is knitted from a thread will cut through the front and back layer to a certain degree such that as the tension for example deriving from fitting a smaller aperture over the larger diameter of the chimney pipe 50 is in place the reinforcement will settle inside the membrane material, such that by simply pressing the membrane material against the chimney pipe 50 the reinforcement 20, see figure 3, will be fixed in its new position embedded in the membrane material. In this manner a stress-less connection providing a long-lasting effect is achieved.

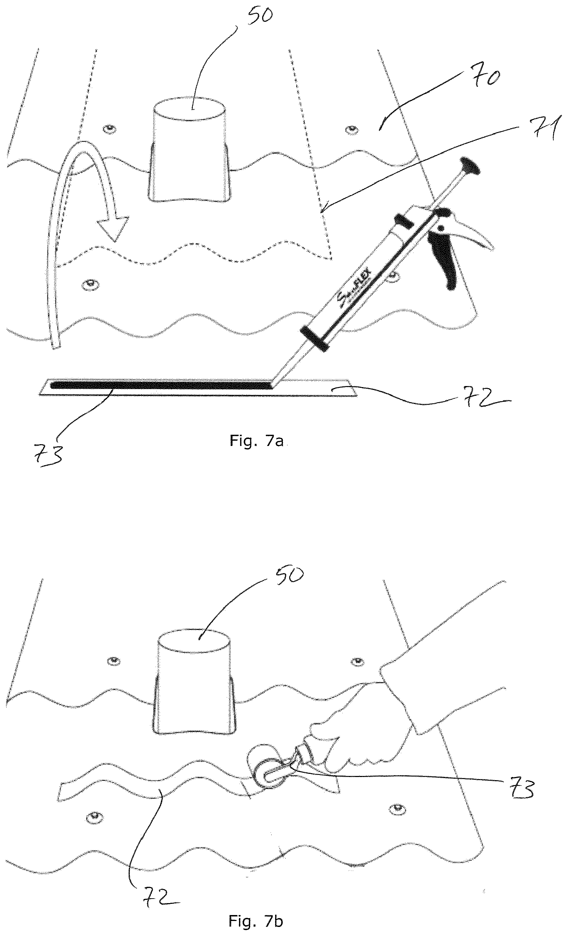

In figures 7a-7d is illustrated the process of positioning a cover material on a corrugated roof. In this example the corrugated roof structure 70 is old and worn. Therefore, the area indicated by dashed lines 71 is thoroughly cleaned and furthermore an intermediate layer 72 is prepared. The intermediate layer will typically be made from a membrane material similar to the membrane material which is to be applied for the entire flashing, and in this instance the intermediate layer 72 is furthermore provided with an adhesive 73 such that a good connection between the intermediate layer 72 and the surface of the roof 70 is ensured.

The intermediate layer is as is evident in figure 7b positioned inside the area 71 downstream from the chimney 50. A similar intermediate member 72 may be positioned above the chimney 50 in order to also ensure a good adherence of the covering member above the chimney member 50. In order to make sure that the intermediate member 72 is in close contact with the corrugated roof 70 a roller 73 is applied to the intermediate layer 72 thereby creating a good adhesive contact between the intermediate member 72 and the corrugated surface of the roof 70.

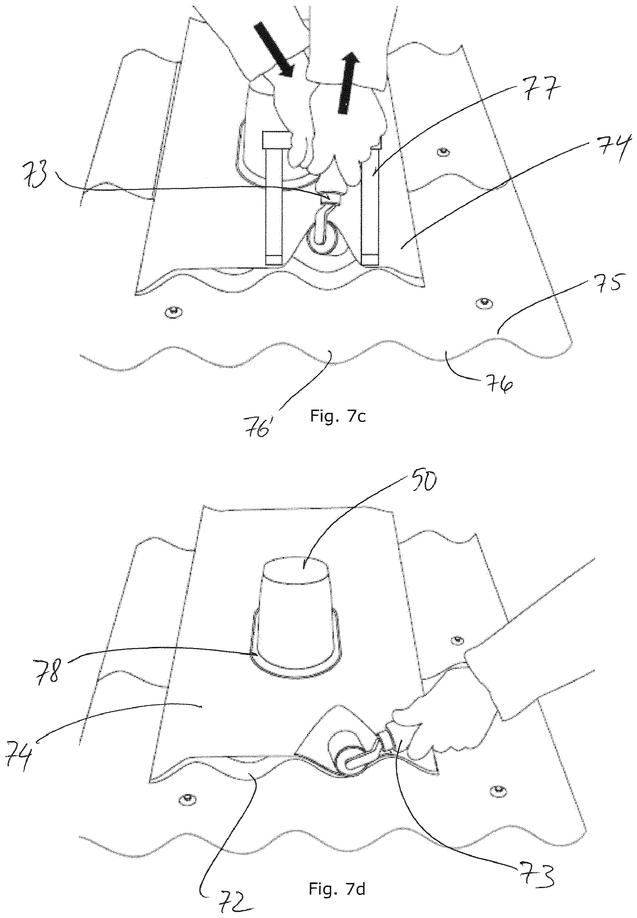

In the next step illustrated in figure 7c a covering material 74 has been selected. The covering material 74 is provided with an aperture which is smaller than the circumference, i.e. outer diameter, of the chimney pipe 50 such that as the covering material 74 is positioned over the chimney pipe the material will be expanded thereby creating a close contact to the chimney pipe 50 as described above with reference to figure 4, 5 and 6.

As the roof in this example is corrugated, it comprises a number of tops 75 and lows 76. With the prior art materials the membrane material would be forced into shape such that it would conform to the tops and lows, for example by use of a hammer or the like, and then be retained in position by adhesive means. With the present membrane material having a knitted reinforcement embedded in the membrane material, it is possible to create a substantially stress-less installation of the covering material 74.

By pre-stressing the material as illustrated in figure 7c, for example by holding the covering material 74 in place on two adjacent tops 75, in this embodiment illustrated by means of a tool 77, and at the same time pulling the material superposed the low 76' thereby stretching the material the embedded reinforcement will be displaced inside the membrane material. This is due to the fact that the knitted reinforcement embedded in the membrane material will be able to cut free and thereby be displaced relative to the original position such that the knitted reinforcement is in this embodiment pulled sideways inside the membrane material such that when the roller is applied as illustrated in figure 7d the reinforcement inside the membrane material will be relocked in place due to the pressing action of the roller 73 squeezing the membrane material down thereby engaging the knitted reinforcement material inside the membrane material.

In this manner the membrane material is stress-free in that the knitted reinforcement has been expanded prior to being positioned such that the reinforcement will not try to regain its original shape thereby putting tension on the adhesive connection between the covering material 74 and the surface of the corrugated roof 70. In this manner a very reliable and long lasting connection is created between the roof 70 and the covering material 74.

In this particular embodiment this is of course further enhanced by the provision of the intermediate member 72 which provides a clean an pre-determined connection between the covering material 74 and the upper surface of the intermediate member 72.

As is evident from figure 7dg the edge of the aperture 78 which is in contact with the chimney pipe 50 has been deformed slightly in order to create the watertight connection as discussed above.

In a variation of the embodiment illustrated in fig. 7c and 7d the flashing may also be achieved by firstly providing a collar 78, from a suitable material. The material shall be selected to have a sealing engagement with the chimney 50, and at the same time being able to create a watertight connection with the covering material 74, either by adhesion of vulcanisation. The finishing i.e. the attachment to the corrugated roof structure is achieved in the same manner.

Due to the chemical composition of the membrane material it is possible to create a tight and geometrically stable and strong connection between end sections 6, 6' of the membrane material simply by activating the upper surface of the end 6 by washing for example with a benzene such that by simply overlapping the other end section 6' and the first end section 6 the materials will adhere to each other in a vulcanized manner creating a homogenous joint which is strong and watertight.

## Claims

1. Membrane material (1) comprising a front layer (10), and a back layer (30), wherein said front layer (10) mainly consists of polyisobutylene, and said back layer (30) mainly consists of butyl based rubber and a content of polyisobutylene **characterized in that** the membrane material further comprises an embedded knitted reinforcement layer (20) wherein the embedded reinforcement layer (20) is knitted from a thread, the material of the thread selected among stainless steel or aluminum, such that such that when the membrane material is stretched the front layer and back layer move independently of the knitted reinforcement layer, while the embedded thread of the knitted reinforcement layer more or less cuts through the material of the front layer and the back layer, until having obtained the membrane material's new stretched configuration where the front layer and back layer will again lock the knitted reinforcement layer in its new position as the membrane material is urged into contact with a surface, such as a corrugated roof surface.

2. Membrane material according to claim 1 wherein the knitted reinforcement layer (20) allows for at least 100% stretch in a first direction, and at least 50% stretch in a second direction perpendicular to said first direction.

3. Membrane material according to claim 1 wherein the knitted reinforcement layer (20) allows for at least 100% stretch in both a first direction and a second direction, said second direction being in an oblique direction relative to said first direction.

4. Membrane material according to claim 1 wherein the front layer (10) furthermore contains a fungicide, algaecide and/or a herbicide.

5. Method of using a membrane material **characterized in that** the membrane material is according to any of claims 1-4, and tween two surfaces (50,60) arranged adjacent to each other but with a distance (63) between the edges of the surfaces, where:
- at least a part of the surfaces (50,60) in the vicinity of the edges is cleaned;
- the back layer (30) of the membrane is brought into contact with at least the cleaned surfaces (50,60) and urged against said surfaces, such that the membrane material (1) spans the distance (63) between the edges.

6. Method according to claim 5 wherein a second covering material (67) in shape of a further membrane material layer is positioned on top of the first covering material (65), where before applying said second covering material (67) to the front layer (10) of the first covering material (65), the front layer (10) is washed with a cleaning solvent, such that the front layer (10) of the first covering material (65), will be able to be vulcanized to the back side of the second covering material (67), when bringing said second covering material (67) into contact with the washed surface.

7. Method according to claim 5, wherein when the front layer (10) of the membrane material (1) is to be connected to the front layer the cleaning solvent is a benzene or benzene derivate, which chemically activates the surfaces to be connected.

8. Method for mounting a covering member, adapted to cover a gap (63) between two surfaces (50,60) in a building, where said cover member (62,65,67) is manufactured from a membrane material according to any of claims 1-4, where a first surface (50) is the circumference of an outer surface of a construction member arranged in close proximity to a second surface (60), wherein the covering member (62) is provided with an aperture, said aperture has a shape smaller than the circumference of the first surface (50), and where said cover member (62) has an upper surface and a lower surface, said lower surface including an adhesive, where a cover foil (40) is applied to the lower surface, where the method comprises the following steps:
∘ A covering member (62) having a suitable aperture corresponding to less than the circumference of the first surface (50) is selected;
∘ The aperture is arranged around the circumference of the first surface (50), whereby the edge of the covering members' aperture is stretched, creating a tight fit with the first surface;
∘ Removing the covering foil (40) from the lower side, thereby exposing the adhesive;
Urging the cover member (62) downwards such that the lower surface comes into adhesive contact with the second surface (60).

9. Method according to claim 5, wherein one of the surfaces (60,70) is a corrugated roof surface, said corrugated surface(60,70) having an undulating surface alternating between tops and lows, and where the covering material (62,65) is first arranged such that the covering material is in contact with a plurality of tops, whereafter the covering material between two tops is stretched by pulling upwards, where the stretching causes the covering material (62,65) to elongate corresponding to 110% or more of the distance to be covered between two tops, thereafter urging the covering material (62,65) downwards into contact with the surface (60,70) between two tops.

10. Method according to claim 5, where before urging the back layer (30) into contact with the surface (60,70) an intermediate layer (72) is adhered to the surface (60,70), where said intermediate layers' (72) underside is fastened to the surface by a suitable adhesive (73), and where said intermediate layers' top side is suitable to be adhesively fastened or vulcanized to the back layer (30) of the membrane material (1,62,65).

## Patentansprüche

1. Membranmaterial (1), umfassend eine vordere Schicht (10) und eine hintere Schicht (30), wobei die vordere Schicht (10) hauptsächlich aus Polyisobutylen besteht und die hintere Schicht (30) hauptsächlich aus Kautschuk auf Butyl-Basis und einem Gehalt an Polyisobutylen besteht, **dadurch gekennzeichnet, dass** das Membranmaterial ferner eine eingebettete gewirkte Verstärkungsschicht (20) umfasst, wobei die eingebettete Verstärkungsschicht (20) aus einem Faden gewirkt ist, wobei das Material des Fadens aus rostfreiem Stahl oder Aluminium ausgewählt ist, so dass, wenn das Membranmaterial gedehnt wird, die vordere Schicht und die hintere Schicht sich unabhängig von der gewirkten Verstärkungsschicht bewegen, während der eingebettete Faden der gewirkten Verstärkungsschicht mehr oder weniger durch das Material der vorderen Schicht und der hinteren Schicht schneidet, bis die neue gedehnte Konfiguration des Membranmaterials erlangt ist, bei der die vordere Schicht und die hintere Schicht die gewirkte Verstärkungsschicht wieder in ihrer neuen Position sperren, wenn das Membranmaterial mit einer Oberfläche, wie z. B. einer Welldachoberfläche, in Kontakt gedrängt wird.

2. Membranmaterial nach Anspruch 1, wobei die gewirkte Verstärkungsschicht (20) eine Dehnung von mindestens 100 % in einer ersten Richtung und eine Dehnung von mindestens 50 % in einer zweiten Richtung senkrecht zu der ersten Richtung ermöglicht.

3. Membranmaterial nach Anspruch 1, wobei die gewirkte Verstärkungsschicht (20) eine Dehnung von mindestens 100 % sowohl in einer ersten Richtung als auch in einer zweiten Richtung ermöglicht, wobei die zweite Richtung in einer schrägen Richtung relativ zu der ersten Richtung liegt.

4. Membranmaterial nach Anspruch 1, wobei die vordere Schicht (10) ferner ein Fungizid, ein Algizid und/oder ein Herbizid enthält.

5. Verfahren zum Verwenden eines Membranmaterials, **dadurch gekennzeichnet, dass** das Membranmaterial einem der Ansprüche 1-4 entspricht und das Membranmaterial (1) als erstes Abdeckmaterial zwischen zwei nebeneinander angeordneten Oberflächen (50, 60) verwendet wird, wobei jedoch zwischen den Kanten der Oberflächen ein Abstand (63) besteht, wobei:
- mindestens ein Teil der Oberflächen (50, 60) in der Nähe der Kanten gereinigt wird;
- die hintere Schicht (30) der Membran mit mindestens den gereinigten Oberflächen (50, 60) in Kontakt gebracht und gegen die Oberflächen gedrängt wird, so dass das Membranmaterial (1) den Abstand (63) zwischen den Kanten überspannt.

6. Verfahren nach Anspruch 5, wobei ein zweites Abdeckmaterial (67) in Form einer weiteren Membranmaterialschicht auf dem ersten Abdeckmaterial (65) positioniert ist, wobei vor dem Aufbringen des zweiten Abdeckmaterials (67) auf die vordere Schicht (10) des ersten Abdeckmaterials (65) die vordere Schicht (10) mit einem Reinigungslösungsmittel gewaschen wird, so dass die vordere Schicht (10) des ersten Abdeckmaterials (65) auf die hintere Seite des zweiten Abdeckmaterials (67) aufvulkanisiert werden kann, wenn das zweite Abdeckmaterial (67) mit der gewaschenen Oberfläche in Kontakt gebracht wird.

7. Verfahren nach Anspruch 5, wobei, wenn die vordere Schicht (10) des Membranmaterials (1) mit der vorderen Schicht verbunden werden soll, das Reinigungslösungsmittel ein Benzol oder Benzolderivat ist, welches die zu verbindenden Oberflächen chemisch aktiviert.

8. Verfahren zum Befestigen eines Abdeckelements, das zum Abdecken eines Spaltes (63) zwischen zwei Oberflächen (50, 60) in einem Gebäude ausgelegt ist, wobei das Abdeckelement (62, 65, 67) aus einem Membranmaterial nach einem der Ansprüche 1-4 hergestellt ist, wobei eine erste Oberfläche (50) der Umfang einer Außenfläche eines Konstruktionselements ist, das in unmittelbarer Nähe zu einer zweiten Oberfläche (60) angeordnet ist, wobei das Abdeckelement (62) mit einer Öffnung versehen ist, wobei die Öffnung eine kleinere Form als der Umfang der ersten Oberfläche (50) aufweist und wobei das Abdeckelement (62) eine obere Oberfläche und eine untere Oberfläche aufweist, wobei die untere Oberfläche einen Klebstoff beinhaltet, wobei eine Abdeckfolie (40) auf die untere Oberfläche aufgebracht ist, wobei das Verfahren die folgenden Schritte umfasst:
∘ Ein Abdeckelement (62) mit einer geeigneten Öffnung, die weniger als dem Umfang der ersten Oberfläche (50) entspricht, wird ausgewählt;
∘ Die Öffnung wird um den Umfang der ersten Oberfläche (50) angeordnet, wobei die Kante der Öffnung des Abdeckelements gedehnt wird, wodurch eine enge Passung mit der ersten Oberfläche erzeugt wird;
∘ Entfernen der Abdeckfolie (40) von der unteren Seite, wodurch der Klebstoff freigelegt wird;
Drängen des Abdeckelements (62) nach unten, so dass die untere Oberfläche in Klebekontakt mit der zweiten Oberfläche (60) kommt.

9. Verfahren nach Anspruch 5, wobei eine der Oberflächen (60, 70) eine Welldachoberfläche ist, wobei die Welldachoberfläche (60, 70) eine wellenförmige Oberfläche aufweist, die zwischen Höhen und Tiefen wechselt, und wobei das Abdeckmaterial (62, 65) zuerst so angeordnet wird, dass das Abdeckmaterial mit einer Vielzahl von Höhen in Kontakt steht, wonach das Abdeckmaterial zwischen zwei Höhen durch Ziehen nach oben gedehnt wird, wobei die Dehnung bewirkt, dass sich das Abdeckmaterial (62, 65) entsprechend 110 % oder mehr des Abstandes, der zwischen zwei Höhen abgedeckt werden soll, verlängert und danach das Abdeckmaterial (62, 65) nach unten in Kontakt mit der Oberfläche (60, 70) zwischen zwei Höhen gedrängt wird.

10. Verfahren nach Anspruch 5, wobei vor dem Drängen der hinteren Schicht (30) in Kontakt mit der Oberfläche (60, 70) eine Zwischenschicht (72) an die Oberfläche (60, 70) geklebt wird, wobei die Unterseite der Zwischenschicht (72) mit einem geeigneten Klebstoff (73) an der Oberfläche befestigt ist und wobei die Oberseite der Zwischenschicht geeignet ist, an der hinteren Schicht (30) des Membranmaterials (1, 62, 65) klebend befestigt oder aufvulkanisiert zu werden.

## Revendications

1. Matériau de membrane (1) comprenant une couche avant (10) et une couche arrière (30), dans lequel ladite couche avant (10) est principalement constituée de polyisobutylène et ladite couche arrière (30) est principalement constituée de caoutchouc à base de butyle et d'une teneur en polyisobutylène, **caractérisé en ce que** le matériau de membrane comprend en outre une couche de renfort tricotée intégrée (20), dans lequel la couche de renfort intégrée (20) est tricotée à partir d'un fil, le matériau du fil étant choisi parmi l'acier inoxydable ou l'aluminium, de sorte que lorsque le matériau de membrane est étiré, la couche avant et la couche arrière se déplacent indépendamment de la couche de renfort tricotée, tandis que le fil intégré de la couche de renfort tricotée coupe plus ou moins le matériau de la couche avant et de la couche arrière, jusqu'à ce qu'une nouvelle configuration étirée soit obtenue pour le matériau de membrane où la couche avant et la couche arrière verrouillent à nouveau la couche de renfort tricotée dans sa nouvelle position lorsque le matériau de membrane est poussé de manière à entrer en contact avec une surface, telle qu'une surface de toit ondulée.

2. Matériau de membrane selon la revendication 1, dans lequel la couche de renfort tricotée (20) permet au moins 100 % d'étirement dans une première direction, et au moins 50 % d'étirement dans une seconde direction perpendiculaire à ladite première direction.

3. Matériau de membrane selon la revendication 1, dans lequel la couche de renfort tricotée (20) permet au moins 100 % d'étirement dans une première direction et une seconde direction, ladite seconde direction perpendiculaire étant dans une direction oblique par rapport à ladite première direction.

4. Matériau de membrane selon la revendication 1, dans lequel la couche avant (10) contient en outre un fongicide, un algicide et/ou un herbicide.

5. Procédé d'utilisation d'un matériau de membrane **caractérisé en ce que** le matériau de membrane est selon l'une quelconque des revendications 1 à 4, et ledit matériau de membrane (1) est utilisé comme premier matériau de revêtement entre deux surfaces (50, 60) disposées l'une à côté de l'autre mais avec une distance (63) entre les bords des surfaces, où :
- au moins une partie des surfaces (50, 60) à proximité des bords est nettoyée ;
- la couche arrière (30) de la membrane est mise en contact avec au moins les surfaces nettoyées (50, 60) et est poussée contre lesdites surfaces, de sorte que le matériau de membrane (1) s'étend sur la distance (63) entre les bords.

6. Procédé selon la revendication 5, dans lequel un second matériau de revêtement (67) en forme d'une autre couche de matériau de membrane est positionné au-dessus du premier matériau de revêtement (65), où avant d'appliquer ledit second matériau de revêtement (67) sur la couche avant (10) du premier matériau de revêtement (65), la couche avant (10) est lavée avec un solvant de nettoyage, de sorte que la couche avant (10) du premier matériau de revêtement (65), peut être vulcanisée sur la face arrière du second matériau de revêtement (67), lors de la mise en contact dudit second matériau de revêtement (67) avec la surface lavée.

7. Procédé selon la revendication 5, dans lequel lorsque la couche avant (10) du matériau de membrane (1) doit être reliée à la couche avant, le solvant de nettoyage est un benzène ou un dérivé de benzène, qui active chimiquement les surfaces à relier.

8. Procédé de montage d'un élément de revêtement, conçu pour couvrir un espace (63) entre deux surfaces (50, 60) dans un bâtiment, où ledit élément de revêtement (62, 65, 67) est fabriqué à partir d'un matériau de membrane selon l'une quelconque des revendications 1 à 4, où une première surface (50) est la circonférence d'une surface extérieure d'un élément de construction disposé à proximité immédiate d'une seconde surface (60), dans lequel l'élément de revêtement (62) est pourvu d'une ouverture, ladite ouverture a une forme plus petite que la circonférence de la première surface (50), et où ledit élément de revêtement (62) a une surface supérieure et une surface inférieure, ladite surface inférieure comportant un adhésif, où une feuille de revêtement (40) est appliquée sur la surface inférieure, où le procédé comprend les étapes suivantes :
o la sélection d'un élément de revêtement (62) ayant une ouverture appropriée correspondant à une circonférence inférieure à la circonférence de la première surface (50) ;
o la disposition de l'ouverture autour de la circonférence de la première surface (50), moyennant quoi le bord de l'ouverture des éléments de revêtement est étiré, créant un ajustement serré avec la première surface ;
∘ le retrait de la feuille de revêtement (40) de la face inférieure, exposant ainsi l'adhésif ;
le fait de pousser l'élément de revêtement (62) vers le bas de sorte que la surface inférieure entre en contact adhésif avec la seconde surface (60).

9. Procédé selon la revendication 5, dans lequel l'une des surfaces (60, 70) est une surface de toit ondulée, ladite surface ondulée (60, 70) ayant une surface ondulée alternant entre sommets et creux, et où le matériau de revêtement (62, 65) est d'abord disposé de sorte que le matériau de revêtement est en contact avec une pluralité de sommets, après quoi le matériau de revêtement entre deux sommets est étiré en tirant vers le haut, où l'étirement provoque l'allongement du matériau de revêtement (62, 65) correspondant à 110 % ou plus de la distance à couvrir entre deux sommets, puis en poussant le matériau de revêtement (62, 65) vers le bas de manière à entrer en contact avec la surface (60, 70) entre deux sommets.

10. Procédé selon la revendication 5, où avant de pousser la couche arrière (30) de manière à entrer en contact avec la surface (60, 70), une couche intermédiaire (72) est collée à la surface (60, 70), où la face inférieure desdites couches intermédiaires (72) est fixée à la surface par un adhésif approprié (73), et où la face supérieure desdites couches intermédiaires peut être fixée par adhésif ou vulcanisée à la couche arrière (30) du matériau de membrane (1, 62, 65).
